# FASCICULE DE BREVET EUROPEEN

(11) **EP 3 478 519 B1**
(45) Date de publication et mention de la délivrance du brevet: **21.04.2021**
(21) Numéro de dépôt: 17734337.3
(22) Date de dépôt: 30.06.2017
(51) Int. Cl.: B60C 17/04, B60C 17/06

(54) **DISPOSITIF DE ROULAGE À PLAT**
NOTLAUFVORRICHTUNG
RUN-FLAT DEVICE

(30) Priorité: 30.06.2016 FR 1656148
(43) Date de publication de la demande: 08.05.2019
(73) Titulaire: Hutchinson, 75008 Paris (FR)
(72) Inventeur: LINCK, Manuel, 95120 ERMONT (FR); HAYOT, Maxime, 95130 FRANCONVILLE LA GARENNE (FR)
(74) Mandataire: Gevers & Orès
(86) Numéro de dépôt international: PCT/EP2017/066367
(87) Numéro de publication internationale: WO 2018/002353

(56) Documents cités:
- EP-A1- 0 104 977
- WO-A1-2010/128305
- DE-A1- 19 750 150

## Description

La présente invention concerne un dispositif de roulage à plat destiné à équiper un ensemble monté pour véhicule automobile et un tel ensemble monté incorporant ce dispositif, permettant de parcourir une distance importante à vitesse relativement élevée lorsque l'ensemble monté est partiellement ou totalement dégonflé.

Pour une jante monobloc, les dispositifs de roulage à plat connus sont généralement constitués par un anneau rigide de soutien qui est monté serré autour d'une jante de roue à l'intérieur d'un pneumatique. Cet anneau est par exemple formé soit d'une seule pièce aux flancs relativement souples pouvant être continue ou une pièce souple ouverte (i.e. fendue), soit d'au moins deux pièces rigides en arc de cercle ou secteurs.

Le document WO-A1-2008/132348 au nom de la Demanderesse présente un dispositif de roulage à plat notamment pour jante monobloc à creux de jante, prévu pour optimiser le calage radial en roulage à l'état gonflé de l'anneau sur la jante (en limitant sa « centrifugation »). Ce dispositif comprend un anneau présentant une face externe de soutien du pneumatique en roulage à plat et, en sa face de montage sur la jante, des moyens tels qu'une lèvre ou patte axiale pour caler l'anneau dans ce creux en épousant son profil, et une ceinture qui enserre l'anneau en étant appliquée sur un renfoncement de sa face de soutien. Cette ceinture peut être pourvue de moyens de raccordement et de verrouillage réversible avec un serrage réglable de ses deux extrémités adjacentes, comme détaillé dans le document EP-A1-2 233 752 également au nom de la Demanderesse.

Le document CN-B-101362421 présente un dispositif gonflable de roulage à plat pour jante monobloc, pourvu d'éléments de soutien en caoutchouc circonférentiellement espacés comportant chacun deux semelles radialement interne et externe, de sorte que la circonférence du dispositif soit couverte à titre très minoritaire par ces éléments et à titre très majoritaire par une ceinture de serrage les traversant.

Un inconvénient majeur des dispositifs connus pour jante monobloc réside notamment dans leur coût de fabrication élevé en raison de leur géométrie spécifique à chaque jante et de l'outillage requis pour leur montage. En particulier, la complexité du dispositif selon CN-B-101362421 génère un coût de fabrication et d'assemblage élevé.

Pour une jante à plusieurs blocs, les dispositifs connus sont généralement constitués par un anneau de soutien divisé en secteurs reliés entre eux par une connectique rigide d'assemblage et de serrage autour de la jante, et par des moyens de blocage des talons du pneumatique contre les rebords de jante destinés à relier ces secteurs aux talons pour assurer la motricité de l'ensemble monté en cas de pression réduite dans ce dernier.

Le document EP-B1-1 550 566 divulgue un dispositif de roulage à plat pour jante à plusieurs blocs comprenant un anneau qui est constitué d'une juxtaposition circonférentielle d'un grand nombre de secteurs creux et compartimentés et sur un renfoncement radial duquel est appliquée une ceinture de serrage verrouillable. Ces secteurs sont connectés deux à deux entre eux de manière rapprochée par des articulations. Il convient de rappeler que, par définition, une « articulation » est un assemblage dont l'élément de liaison est formé par un axe ou par une rotule permettant un déplacement angulaire relatif des pièces assemblées (Larousse). Dans le cas du document EP-B1-550 566, les pièces assemblées correspondent aux secteurs qui sont liés par un élément de liaison de type axe (axe 16 sur la figure 7 de ce document). Par ailleurs, dans ce document, les secteurs présentent chacun une face radialement interne de montage qui est ouverte sur la jante.

Un inconvénient majeur des dispositifs connus pour jante à plusieurs blocs réside notamment dans la nécessité d'utiliser un outillage spécifique pour les insérer et les verrouiller à l'intérieur des pneumatiques. De plus et s'agissant du dispositif selon EP-B1-1 550 566, la structure complexe des secteurs articulés complique encore le montage du dispositif à l'intérieur du pneumatique en pénalisant son coût de fabrication et d'assemblage.

On peut citer d'autres documents parmi lesquels DE 197 50 150 A1, EP 0 104 977 A1 et WO 2010/128305 A1. En particulier, dans le document WO 2010/128305 A1, il est proposé un dispositif de roulage à plat selon le préambule de la revendication 1.

Un but de la présente invention est de proposer un dispositif de roulage à plat selon la revendication 1.

Par « tranches axiales », on entend dans la présente description des tronçons tridimensionnels dont l'épaisseur de tranche dans la direction circonférentielle de l'anneau, mesurée en leur face interne de montage, est inférieure à leur largeur et à leur hauteur respectivement dans les directions axiale et radiale de l'anneau. Ainsi, ces tranches axiales définissent globalement en leurs faces frontales des tronçons sectionnés suivant des plans axiaux méridiens ou non méridiens (i.e. qui passent ou ne passent pas par l'axe de révolution de l'anneau en étant globalement perpendiculaires à son plan circonférentiel médian). En d'autres termes, ces faces frontales de tranches axiales peuvent être contenues dans ou légèrement inclinées par rapport à ces plans méridiens.

Par « tranches jointives », on entend dans la présente description de telles tranches axiales qui sont deux à deux sensiblement en contact au niveau d'arêtes axiales en regard de leurs faces de montage respectives, via :
- un jeu axial faible ou nul dans la direction circonférentielle (ce jeu peut varier sur la circonférence de l'anneau et est par exemple compris entre 0 mm et 10 mm, avantageusement entre 0,5 mm et 5 mm) sur toute ou partie de la circonférence de l'anneau, et/ou
- des cales de hauteur radiale inférieure à celle des tranches et intercalées entre deux tranches consécutives sur toute ou partie de la circonférence de l'anneau (ces cales seront décrites dans la suite de la présente description), avec également un tel jeu axial faible ou nul pouvant être variable sur cette circonférence (par exemple compris entre 0 et 10 mm, avantageusement entre 0,5 et 5 mm) ménagé entre chaque cale et les deux tranches consécutives qui lui sont adjacentes.

On notera toutefois que l'intervalle de connexion séparant dans la direction circonférentielle les deux extrémités en regard de ladite au moins une ceinture de maintien et intégrant lesdits moyens de raccordement et de verrouillage, est dépourvu de toute tranche et doit s'étendre sur une distance supérieure à ce jeu axial circonférentiel pour pouvoir accéder dans de bonnes conditions à ces moyens. Cet intervalle peut par exemple s'étendre sur une distance comprise entre 30 mm et 70 mm, avantageusement entre 40 mm et 60 mm.

Par « tranches espacées entre elles », on entend dans la présente description de telles tranches axiales qui ne répondent pas à cette définition des tranches jointives sur toute ou partie de la circonférence de l'anneau, et qui sont par exemple séparées deux à deux entre elles dans la direction circonférentielle d'une distance supérieure à 10 mm, voire à 20 mm. En effet, il n'est pas indispensable pour la présente invention d'avoir de telles tranches jointives sur toute ou partie de la circonférence de l'anneau.

Par « somme totale d'espacements consécutifs » inférieure à π.D/2 selon la présente invention, on entend ici que la circonférence interne π.Di de la structure annulaire discontinue formée par l'anneau (de diamètre interne Di en sa face de montage, avec Di sensiblement égal au diamètre D du fond de jante) est majoritairement occupée par les tranches axiales juxtaposées, ce qui se traduit par le fait que (avec D - Di) :
- la somme de tous les espacements circonférentiels consécutifs entre les tranches est inférieure à π.Di/2 (i.e. inférieure à la moitié de la circonférence interne de l'anneau), et par conséquent que
- la somme des épaisseurs circonférentielles de toutes les tranches est supérieure à π.Di/2 (i.e. supérieure à la moitié de la circonférence interne de l'anneau).

Avantageusement, ces tranches peuvent être espacées entre elles par une somme totale d'espacements consécutifs, mesurés au niveau de ladite face de montage, qui est inférieure à π.D/4 et encore plus avantageusement inférieure à π.D/8 (ce qui signifie que la circonférence interne π.Di de l'anneau est occupée au moins aux trois quarts ou au moins aux sept huitièmes, respectivement, par les tranches juxtaposées).

Egalement avantageusement, les tranches peuvent présenter chacune, sur toute ou partie de ladite circonférence de l'anneau, une épaisseur circonférentielle de tranche mesurée en sa face de montage inférieure ou égale à π.D/25 soit à D/8 environ, et encore plus avantageusement inférieure ou égale à π.D/50 soit à D/16 environ (toujours avec D ∼ Di).

On notera que ces tranches axiales selon J'invention qui sont reliées sans articulations entre elles (i.e. sans élément de liaison, de type axe ou rotule, notamment assimilable à une fixation, entre tranches consécutives) présentent l'avantage de pouvoir être réalisées aisément et selon un coût de fabrication, d'assemblage et de montage réduit à l'intérieur de l'ensemble monté. En effet, un dispositif selon l'invention se présente avantageusement, avant son montage à l'intérieur du pneumatique, sous la forme d'une bande plate linéaire qui est facile à emballer et à manipuler. On peut aussi imaginer que le dispositif soit livré non assemblé, à savoir sous forme de kit.

En relation avec le montage d'un dispositif selon l'invention sur une jante monobloc, on notera que certaines des tranches peuvent ne pas présenter de lèvre ou patte radialement interne de calage dans le creux de jante, contrairement au dispositif selon WO-A1-2008/132348, par exemple.

D'une manière générale pour les tranches selon l'invention :
- elles peuvent chacune indépendamment être réalisées en :
   * un ou plusieurs matériaux tels que des élastomères (caoutchoucs ou élastomères thermoplastiques) et/ou des matières plastiques (de type polymères thermoplastiques et/ou thermodurcissables), à titre non limitatif, par exemple en utilisant un matériau plus amortissant au niveau de la face de soutien de l'anneau, et éventuellement selon différents procédés de fabrication éventuellement combinés pour obtenir l'ensemble des tranches ; et/ou
   * en une seule partie (tranche monobloc) ou en plusieurs parties assemblées entre elles (e.g. en au moins deux parties radialement interne et externe qui sont chacune, indépendamment de l'autre, à base d'un ou plusieurs matériaux et qui sont solidarisées l'une avec l'autre par des moyens mécaniques ou chimiques ; avantageusement un premier matériau dit souple au-dessus de la portée et un deuxième matériau dit rigide, et en tout cas plus rigide que le premier matériau, au-dessous de la portée) ; et/ou
- ces tranches peuvent présenter des épaisseurs identiques ou non, mesurées en leurs faces de montage et/ou des profils identiques ou non, avec des surfaces planes ou non en leurs faces frontales et/ou latérales.

On notera en outre que ces tranches axiales juxtaposées d'épaisseur(s) réduite(s) présentent les avantages suivants en comparaison des anneaux de soutien existants de type fendus ou à secteurs :
- Un montage/démontage aisé, avec un risque moindre d'endommagement du pneumatique, du fait que la lèvre d'une tranche laisse un espace suffisant au talon du pneumatique ;
- Un mouvement possible du talon du pneumatique de part et d'autre de l'anneau lors du montage ;
- Une robustesse accrue au montage en cas d'écart dimensionnel par rapport au profil de la jante ;
- Un contact quasiment continu avec la jante grâce au grand nombre de tranches, qui améliore les performances en roulage à plat ;
- Une ventilation améliorée lors du roulage à plat du ou des matériaux utilisés pour les tranches, ce qui permet de réduire le risque d'échauffement et donc de ramollissement de l'anneau et contribue ainsi à améliorer encore les performances en roulage à plat du dispositif ; et
- Une propagation de fissures limitée en cas d'impacts balistiques ou autres, du fait de la juxtaposition de tranches indépendantes.

Selon une autre caractéristique de l'invention, lesdites tranches peuvent être en outre enfilées sur au moins un lien annulaire de maintien circonférentiel desdites tranches, lesquelles peuvent être alors traversées par ledit au moins un lien entre deux extrémités adjacentes de lien positionnées en regard desdites extrémités de ceinture, en au moins une zone d'enfilage pour chaque tranche qui est distincte de ladite au moins une portée et qui est localisée radialement à l'extérieur et/ou radialement à l'intérieur et/ou axialement de part et d'autre de ladite au moins une portée.

On notera que cet enfilage des tranches à la manière d'un collier de perles permet de les relier entre elles pour qu'elles restent alignées axialement les unes contre les autres en roulage.

De plus, la présence d'au moins un lien annulaire facilite le montage du dispositif de roulage à plat dans le pneumatique.

Avantageusement, ledit au moins un lien annulaire peut être choisi parmi les liens métalliques par exemple formés de câbles toronnés ou non, les liens textiles par exemple formés de câblés, les liens élastiques par exemple formés de joncs élastomères et des combinaisons d'au moins deux desdits liens.

Selon une autre caractéristique de l'invention, les tranches peuvent être reliées deux à deux entre elles, sur toute ou partie de ladite circonférence, par au moins une cale qui se termine radialement en retrait de ladite au moins une portée et contre laquelle sont montées en butée circonférentielle des zones radialement internes de deux tranches consécutives. Dans ce cas, ladite au moins une cale peut avantageusement recevoir une extrémité dudit au moins un lien et/ou comprendre une multitude de cales qui sont intercalées entre les tranches deux à deux adjacentes et qui sont traversées par ledit au moins un lien en dehors des extrémités de lien.

Il convient de noter que dans le cas où aucune cale n'est prévue avec l'anneau, le ou chaque lien annulaire peut être retiré, une fois la ceinture de maintien mise en place, avantageusement verrouillée, dans le pneumatique. Cela permet de réduire le poids de l'ensemble monté.

Avantageusement, sur toute ou partie de ladite circonférence, les tranches peuvent présenter chacune une épaisseur circonférentielle qui varie dans une direction axiale de l'anneau, par exemple avec un agencement en quinconce de faces latérales des tranches suivant des épaisseurs en alternance minimales et maximales. Cet agencement en quinconce apporte une meilleure stabilité à l'anneau en bloquant une éventuelle rotation des tranches axiales.

Egalement avantageusement, sur toute ou partie de ladite circonférence, les tranches peuvent présenter chacune une épaisseur circonférentielle qui varie dans une direction radiale de l'anneau, par exemple qui croît de ladite face de montage à ladite face de soutien. Cette variation d'épaisseur circonférentielle qui varie dans une direction radiale de l'anneau permet d'augmenter la surface de la face de soutien.

En variante, sur tout ou partie de ladite circonférence, lesdites tranches sont inclinées de manière oblique à partir dune zone radialement interne de chaque tranche, par rapport au plan sensiblement radial de cette zone radialement interne.

Selon un premier mode de réalisation de l'invention, ladite face de montage de tout ou partie desdites tranches est adaptée pour épouser un profil axial dudit fond de jante, la jante étant monobloc à creux de jante circonférentiel, tout ou partie desdites tranches comportant des moyens de calage, tels qu'une lèvre ou patte axialement en saillie sur un bord latéral de chaque tranche, qui sont adaptés pour caler chaque tranche dans ledit creux.

Comme indiqué ci-dessus, ces moyens de calage au niveau de la face de montage de l'anneau peuvent n'être présents qu'en un nombre limité de tranches, ce qui signifie que les tranches restantes peuvent être exemptes de toute lèvre ou patte de calage dans le creux de jante.

Selon un second mode de réalisation de l'invention, ladite face de montage de tout ou partie desdites tranches est adaptée pour épouser un profil axial sensiblement plat du fond de la jante qui est à plusieurs blocs et se termine par deux rebords de jante axialement interne et externe, et toutes ou partie des tranches présentant une largeur axiale par exemple adaptée pour bloquer axialement par compression des talons du pneumatique contre ces rebords.

Un ensemble monté selon l'invention pour véhicule automobile comprend une jante de roue, un pneumatique monté contre deux rebords de jante axialement interne et externe et un dispositif de roulage à plat monté sur la jante et destiné à soutenir le pneumatique en roulage à plat, qui est tel que défini ci-dessus. Cet ensemble monté peut être tel que :
- la jante est monobloc à creux de jante circonférentiel, lesdites faces de montage de toutes ou partie des tranches étant montées dans ce creux sur toute la largeur axiale de ce dernier, ou que
- la jante est à plusieurs blocs et à fond sensiblement plat, les tranches pouvant bloquer axialement des talons du pneumatique contre ces rebords de jante.

D'une manière générale en référence à l'ensemble des caractéristiques précitées de l'invention, on notera que ladite au moins une ceinture de maintien appliquée en retrait de la face de soutien de l'anneau n'interfère pas avec le pneumatique en roulage à plat et permet de maintenir l'anneau sur la jante. La ou chaque ceinture peut être avantageusement de type collier métallique, notamment en relation avec une jante monobloc à creux de jante, et être plus ou moins épaisse dans la direction radiale tout en étant suffisamment flexible pour être facilement insérable à l'intérieur du pneumatique et sensiblement indéformable une fois verrouillée vis-à-vis des efforts transmis en roulage, pour s'opposer efficacement à la « centrifugation » de l'anneau en roulage à l'état gonflé.

En relation avec une jante à plusieurs blocs, la ou chaque ceinture peut être de type à verrouillage ou non, étant avantageusement formée d'une sangle fermée en tissu solidaire de ladite au moins une portée de chaque tranche (e.g. par collage ou accrochage mécanique), ou bien d'une tringle métallique de diamètre fixe, ou encore d'une courroie en caoutchouc renforcé. Une telle ceinture permet d'insérer facilement l'anneau à l'intérieur du pneumatique et est également conçue pour être quasiment indéformable vis-à-vis des efforts transmis en roulage à l'état gonflé.

Quant auxdits moyens de raccordement et de verrouillage équipant ladite au moins une ceinture selon l'invention pour son serrage réglable, ils peuvent être avantageusement tels que décrits dans le document précité EP-A1-2 233 752, bien que d'autres connectiques verrouillables ou non soient utilisables.

Conformément à EP-A1-2 233 752, ces moyens peuvent être pourvus d'un organe de verrouillage monté solidaire de l'une des extrémités de la ceinture de sorte à occuper une position de déverrouillage où l'organe est dégagé de ces moyens pour le serrage et desserrage de la ceinture, et une position de verrouillage où l'organe vient en prise avec eux de sorte à s'opposer au desserrage. Ces moyens sont aptes à rapprocher ou à éloigner ces extrémités l'une de l'autre par une rotation appliquée auxdits moyens respectivement dans le sens d'un serrage ou d'un desserrage de la ceinture, et cet organe est alors adapté pour s'opposer à la rotation de ces moyens dans la position de verrouillage. Ces moyens peuvent comprendre une tige cylindrique présentant en ses portions terminales deux filetages en sens opposés guidés en rotation dans deux tourillons transversaux fixés aux extrémités à raccorder, sous la commande d'un organe de manœuvre de la tige solidaire en rotation d'une portion centrale de celle-ci.

D'autres caractéristiques, avantages et détails de la présente invention ressortiront à la lecture de la description suivante de plusieurs exemples de réalisation de l'invention donnés à titre illustratif et non limitatif, la description étant réalisée en référence aux dessins joints, parmi lesquels :
Dans la présente description, les expressions « axialement interne » et « axialement externe » se réfèrent respectivement aux côtés de la jante destinés à être tournés vers l'intérieur et l'extérieur du véhicule, et « radialement interne » et « radialement externe » respectivement à des directions radiales par rapport à la jante s'en rapprochant et s'en éloignant.
la figure 1 est une vue en demi-coupe axiale d'un ensemble monté selon le premier mode de l'invention incorporant un anneau de soutien à tranches selon le premier exemple de l'invention (la tranche visible se situant hors des extrémités raccordées de la ceinture, non illustrée),
la figure 2 est une vue latérale et en perspective du dispositif de la figure 1 montrant les tranches de l'anneau traversées par une ceinture fermée par des moyens de raccordement verrouillé de ses extrémités,
la figure 3 est vue latérale et en perspective d'un lien annulaire de maintien circonférentiel des tranches du dispositif de la figure 3,
la figure 4 est une vue latérale et en perspective d'un exemple de ceinture de serrage pourvue de moyens de raccordement à serrage réglable et verrouillables utilisables à la figure 3,
les figures 4(a) et 4(b) sont des vues latérales et en perspectives d'un exemple de ceinture de serrage pourvue de moyens de raccordement à serrage non réglable et verrouillable utilisables à la figure 3, en position non verrouillée sur la figure 4(a) et en position verrouillée sur la figure 4(b),
les figures 4(c) et 4(d) sont des vues latérales et en perspectives d'un exemple de ceinture de maintien pourvue de moyenns de raccordement verrouillables utilisables à la figure 3, les moyens de raccordement n'assurant aucun serrage, la position non verrouillée étant représentée sur la figure 4(c) et la position verrouillée sur la figure 4(d) ;
la figure 5 est une vue de face d'une tranche d'un anneau utilisable dans un dispositif selon l'invention, conformément à des variantes de la figure 1,
la figure 6 est une vue latérale schématique partielle illustrant un exemple de montage jointif, sur une jante monobloc ou à plusieurs blocs, de deux tranches consécutives d'un dispositif selon l'invention,
la figure 7 est une vue latérale schématique partielle montrant un autre exemple de montage jointif, sur une jante monobloc ou à plusieurs blocs, de deux tranches consécutives d'un dispositif selon l'invention,
la figure 8 est une vue latérale schématique partielle illustrant un exemple de montage espacé, sur une jante monobloc ou à plusieurs blocs, de deux tranches consécutives d'un dispositif selon l'invention,
la figure 9 est une vue de dessus et en perspective d'une tranche selon ledit premier exemple de l'invention se situant hors des extrémités à raccorder de la ceinture, analogue à celle visible à la figure 1,
la figure 9a est une vue de dessus et en perspective d'une tranche d'extrémité selon ledit premier exemple de l'invention, prévue en une extrémité à raccorder de la ceinture et pouvant être combinée à des tranches selon la figure 9,
la figure 10 est une vue de dessus et en perspective d'une tranche selon une variante dudit premier exemple de l'invention se situant hors des extrémités à raccorder de la ceinture,
la figure 10a est une vue de dessus et en perspective d'une tranche d'extrémité selon une variante dudit premier exemple de l'invention, prévue en une extrémité à raccorder de la ceinture et pouvant être combinée à des tranches selon la figure 10,
la figure 11 est une vue de dessus et en perspective d'une tranche selon une autre variante dudit premier exemple de l'invention se situant hors des extrémités à raccorder de la ceinture,
la figure 11a est une vue de dessus et en perspective d'une autre tranche d'extrémité selon une autre variante dudit premier exemple de l'invention, prévue en une extrémité à raccorder de la ceinture et pouvant être combinée à des tranches selon la figure 11,
la figure 12 est une vue de dessus et en perspective d'une tranche selon un second exemple ne faisant pas partie de l'invention se situant hors des extrémités à raccorder de la ceinture,
la figure 13 est une vue de dessus et en perspective d'une tranche selon une variante dudit second exemple ne faisant pas partie de l'invention se situant hors des extrémités à raccorder de la ceinture,
la figure 14 est une vue de dessus et en perspective d'une autre tranche selon ledit premier exemple de l'invention se situant hors des extrémités à raccorder de la ceinture et suivant une variante de la figure 9,
la figure 15 est une vue partielle de dessus et en perspective d'un agencement selon l'invention de tranches jointives présentant en alternance une épaisseur croissante et décroissante d'un bord latéral à l'autre,
la figure 16 est une vue partielle de dessus et en perspective d'un agencement selon l'invention de tranches jointives présentant une épaisseur croissante de leur face de montage à leur face de soutien,
la figure 17 est une vue partielle en section dans un plan circonférentiel médian d'un anneau selon l'invention, montrant l'utilisation d'une seule cale entre les deux tranches d'extrémités de l'anneau au niveau d'une ouverture d'un lien annulaire de maintien tel que celui de la figure 3, et
la figure 18 est une vue partielle en section dans un plan circonférentiel médian d'un anneau selon l'invention, montrant l'utilisation selon la figure 7 d'une multitude de cales entre tranches consécutives de l'anneau maintenues par un tel lien annulaire, hors tranches d'extrémités ;
La figure 19 comprend la figure 19(a) qui est une vue latérale et en perspective d'un dispositif conforme à l'invention montrant d'autres formes de tranches envisageables, permettant d'obtenir des tranches jointives et imbriquées et la figure 19(b) montre l'une de ces tranches, de manière isolée, selon la même vue ;
La figure 20, qui comprend les figures 20(a) et 20(b), représente une autre conception possible pour des tranches jointives et imbriquées, respectivement selon une vue latérale et en perspective et selon la même vue, pour une tranche isolée ;
La figure 21 est une vue en coupe montrant un dispositif conforme à l'invention dans lequel la répartition de la masse est équilibrée, par un retrait de matière sur certains secteurs ;
La figure 22, qui comprend les figures 22(a) et 22(b), est une vue en perspective d'un secteur isolé sur lequel est prévu une ou plusieurs masses d'équilibrage.

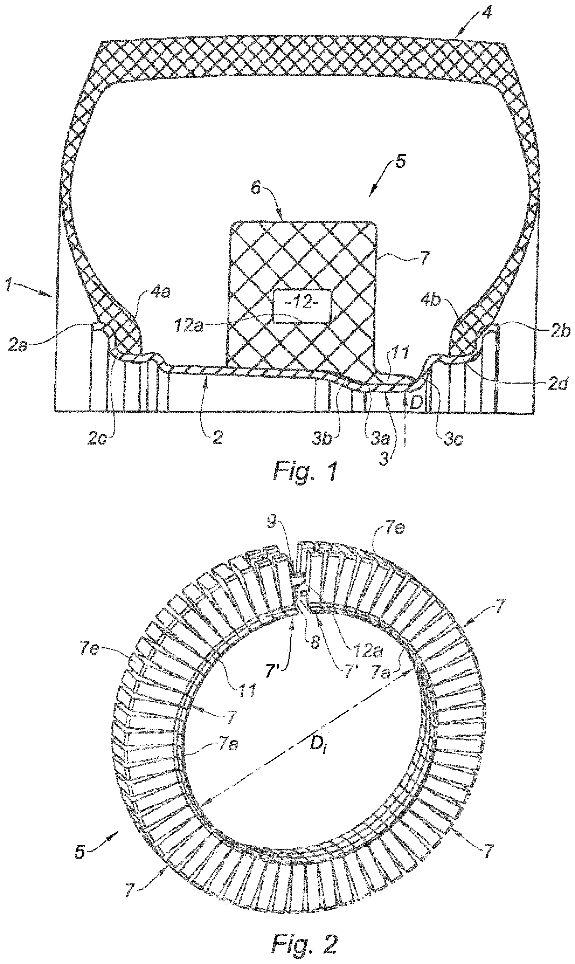

L'ensemble monté 1 illustré à la figure 1 selon le premier mode de l'invention comprend une jante de roue 2 asymétrique de type monobloc comportant un creux de jante 3 circonférentiel, un pneumatique 4 monté contre des rebords axialement interne et externe 2a, 2b de la jante 2, et un dispositif de roulage à plat 5 monté dans le creux 3 et destiné à soutenir le pneumatique 4 suite à une chute de pression de gonflage à l'intérieur de l'ensemble monté 1.

La jante 2 comporte des sièges de jante axialement interne et externe 2c, 2d respectivement destinés à recevoir des talons 4a, 4b du pneumatique 4, chaque siège de jante 2c, 2d étant délimité axialement par l'un des rebords 2a, 2b. Dans l'exemple de la figure 1, le creux 3 est à fond 3a (de diamètre D) délimité axialement par deux parois obliques 3b, 3c, et la paroi axialement externe 3c du fond 3a aboutit au siège externe 2d.

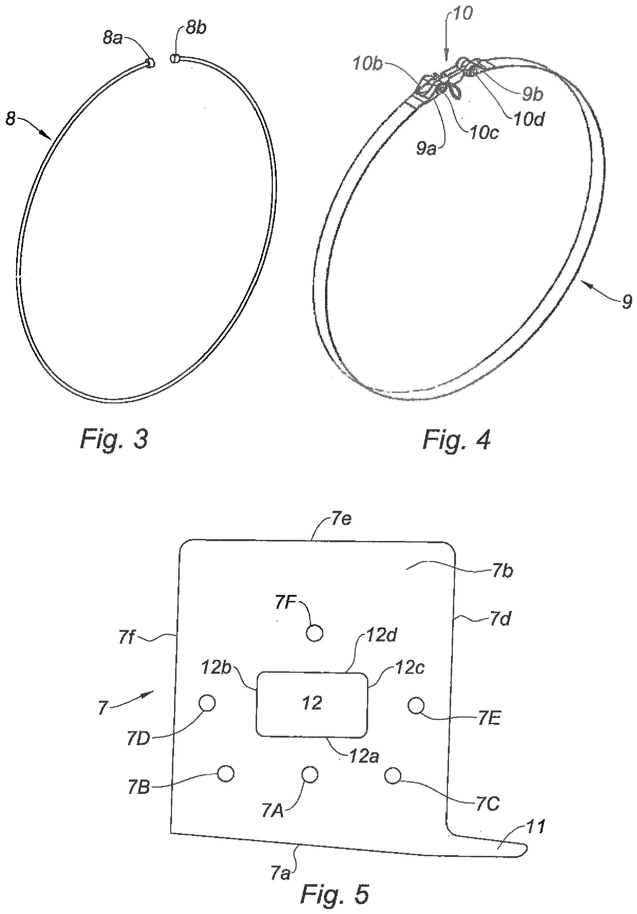

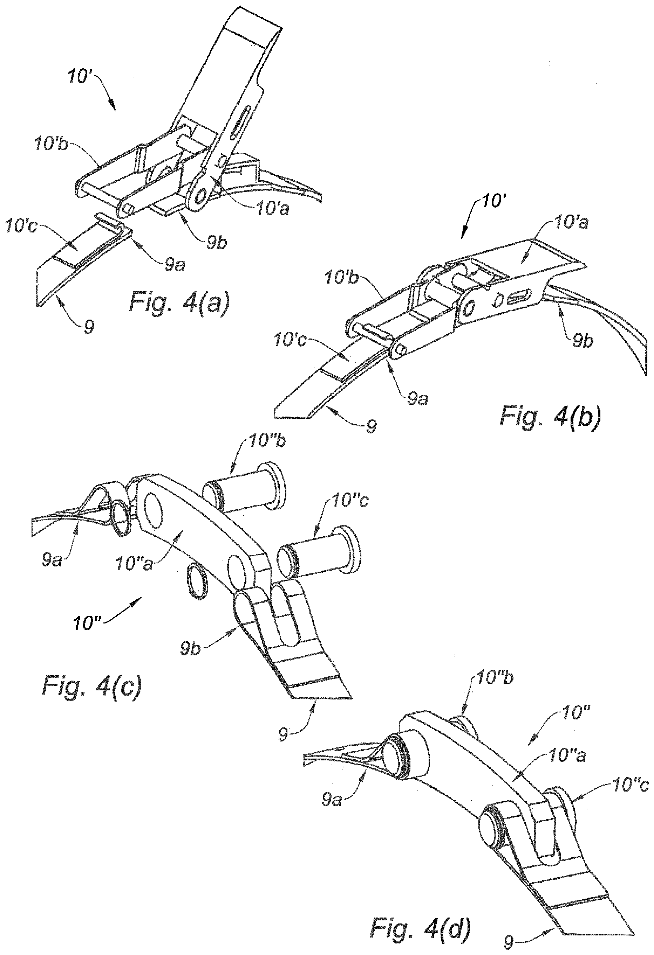

Le dispositif 5 des figures 1-2 est adapté pour être positionné sur le fond 3a du creux 3, et il comprend :
- un anneau de soutien 6 comprenant une multitude de n tranches axiales 7 (n = 63 dans l'exemple de la figure 2) juxtaposées dans la direction circonférentielle de manière jointive au niveau des arêtes en regard des faces de montage 7a radialement internes (de diamètre Di) respectives des tranches 7, lesquelles sont maintenues entre elles par un lien annulaire de maintien circonférentiel 8 les traversant tel que celui de la figure 3, et
- une ceinture annulaire de maintien 9 par exemple métallique à serrage réglable, telle que celle de la figure 4 et verrouillable de préférence via les moyens de raccordement 10 illustrés à la figure 4 et décrits dans le document EP-A1-2 233 752.

Les tranches 7 visibles à la figure 2 présentent chacune une même structure monobloc, un même matériau de réalisation, une même géométrie et une même épaisseur, étant précisé que la structure (monobloc ou en plusieurs parties), le ou les matériaux, la géométrie (notamment le profil des faces frontales 7b, 7c) et/ou l'épaisseur des tranches 7 pourrait varier dans la direction radiale et/ou axiale et/ou circonférentielle de l'anneau 6, comme expliqué ci-dessus.

Toutes ou partie des tranches 7 de l'anneau 6 présente(nt) chacune en sa face de montage 7a des moyens 11 pour caler la tranche 7 dans le creux de jante 3, constitués dans cet exemple d'une lèvre circonférentielle 11 qui est formée axialement en saillie sur la face latérale axialement externe 7d de chaque tranche 7 et qui en fait partie intégrante. Cette lèvre de calage 11 présente une largeur axiale de l'ordre de celle du fond 3a du creux 3, du fait qu'elle est conçue pour être appliquée sur ce fond 3a et au contact de la paroi latérale externe 3c du creux 3.

Chaque tranche 7, hors tranches d'extrémités 7' de l'anneau 6 à raccorder mutuellement, présente dans l'exemple des figures 1 et 2 une lumière traversante 12 de section par exemple rectangulaire qui débouche sur les faces frontales avant 7b et arrière 7c de la tranche 7 et qui est formée radialement entre la face de montage 7a et la face de soutien 7e radialement externe de la tranche 7 (sensiblement à mi-hauteur radiale de la tranche 7 dans cet exemple) et axialement de manière centrée entre les deux faces latérales 7d et 7f de la tranche 7. Un bord radialement interne 12a de la lumière 12 définit pour chaque tranche 7 une portée recevant la ceinture 9.

Et en relation avec les figures 2, 3 et 5, chaque tranche 7 peut optionnellement présenter radialement entre la face de montage 7a et le bord interne 12a de la lumière 12 un orifice axialement central 7A traversé par le lien annulaire 8 de maintien des tranches 7 qui, dans l'exemple de la figure 3, est formé d'un anneau fendu (i.e. à deux extrémités 8a, 8b situées en regard l'une de l'autre et définissant une ouverture du lien 8 située radialement au même niveau sur la circonférence de l'anneau 6 que les moyens de raccordement 10 des extrémités 9a, 9b de la ceinture 9), en l'occurrence assimilable à la forme d'un jonc de section ronde. Il pourrait en être autrement puisque ce lien annulaire 8 pourrait se présenter sous la forme d'un jonc à section carrée ou rectangulaire, ou d'une sangle ou encore d'une lame plate

Comme visible à la figure 2, les tranches 7 jointives ne sont quasiment pas espacées entre elles sur la circonférence de l'anneau 6 au niveau de leur face de montage 7a (à l'exception de l'intervalle entre les deux tranches d'extrémités 7' raccordées par les moyens 10, intervalle qui peut être de 50 mm par exemple pour permettre d'accéder dans de bonnes conditions à ces moyens 10), de sorte que la somme totale d'espacements consécutifs mesurés entre les tranches 7, 7' au niveau de cette face 7a est nettement inférieure à π.D/16, étant même inférieure à π.D/32. De plus, les tranches 7 présentent chacune une épaisseur circonférentielle mesurée en la face de montage 7a qui dans cet exemple est inférieure ou égale à π.D/60.

Comme illustré à la figure 4, la ceinture 9 selon l'invention est formée par une bande annulaire dont la paire d'extrémités 9a, 9b sont raccordées l'une à l'autre par les moyens de raccordement 10 à serrage réglable et verrouillable par un organe de verrouillage 10a monté pivotant en une extrémité 9b. Ces moyens 10 sont constitués d'une tige cylindrique 10b de type goujon se terminant par deux filetages en sens opposés guidés en rotation dans deux tourillons transversaux 10c, 10d fixés aux extrémités 9a, 9b à raccorder, sous la commande d'un écrou de manœuvre de la tige 10b solidaire en rotation d'une portion centrale de la tige 10b.

L'utilisation de moyens de raccordement 10 à serrage réglable et verrouillable pour la ceinture 9 n'est pas obligatoire.

En effet, on peut utiliser des moyens de raccordement 10' à serrage non réglable et verrouillable, comme cela est illustré aux figures 4(a) et 4(b), respectivement en position non verrouillée et en position verrouillée. Sur ces figures, le serrage non réglable et le verrouillage s'effectue par un système de type grenouillère 10'. Il comprend un organe de verrouillage 10'a, 10'b comportant un première partie 10'a montée pivotante sur l'une 9b des extrémités 9a, 9b de la ceinture 9 et une deuxième partie 10'b, montée pivotant sur le la première partie 10'a. L'autre extrémité 9a de la ceinture est munie d'un crochet 10'c monté fixe sur la ceinture, avec lequel la deuxième partie 10'b de l'organe 10' peut venir en prise pour assurer le verrouillage.

En variante, on peut encore utiliser des moyens de raccordement 10" qui assurent un verrouillage, sans serrage. Un exemple susceptible de convenir un est système de type plaque/goupille, comme cela est représenté sur les figures 4(c) et 4(d), respectivement en position non verrouillée et en position verrouillée. Plus précisément, on prévoit alors une plaque 10"a munie à ses extrémités d'orifices permettant de faire passer des goupilles 10"b, 10"c. Les extrémités 9a, 9b de la ceinture 9 sont agencées en formes de boucles pour recevoir d'une part la plaque 10"a et d'autre part les goupilles 10"b, 10"c.

On a représenté à la figure 5 divers emplacements 7A, 7B, 7C, 7D, 7E, 7F utilisables à titre non limitatif pour faire passer le lien 8 à travers chaque tranche 7 incluant :
- axialement de part et d'autre de l'emplacement axialement central 7A de la figure 2, deux emplacements latéraux radialement internes 7B, 7C localisés radialement entre la face de montage 7a et le bord interne 12a de la lumière 12,
- axialement de part et d'autre des bords latéraux 12b, 12c de la lumière 12, deux emplacements latéraux radialement intermédiaires 7D, 7E localisés radialement à la même hauteur médiane que la lumière 12, et
- de manière axialement centrée sur la lumière 12, un emplacement central radialement externe 7F localisé radialement entre le bord externe 12d de la lumière 12 et la face de soutien 7e.

En variante de la juxtaposition jointive de la figure 2 avec une absence de jeu axial dans la direction circonférentielle entre tranches 7 consécutives, on a illustré :

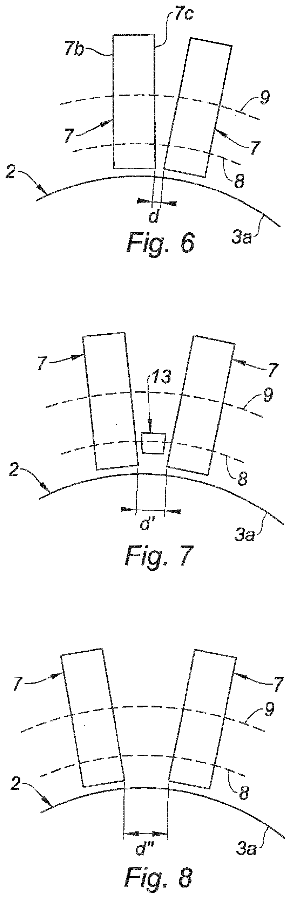

- à la figure 6 une juxtaposition également dite jointive, en ce sens que le jeu axial circonférentiel d entre tranches 7 consécutives (hors tranches d'extrémités 7' à raccorder ensemble par les moyens 10 est très faible, étant ici typiquement de l'ordre de 1 mm ;
- à la figure 7 une juxtaposition pouvant être également qualifiée de jointive, en ce sens que l'on interpose au moins une cale 13 de hauteur radiale réduite entre des zones radialement internes de tranches 7 deux à deux consécutives (la ou chaque cale 13 n'entravant pas la traversée des tranches 7 par la ou chaque ceinture 9 et pouvant être optionnellement traversée par le ou chaque lien annulaire de maintien 8), de sorte que le jeu axial circonférentiel d'entre la ou chaque cale 13 et les deux tranches 7 qu'elle sépare est également très faible (typiquement de l'ordre de 1 mm, hors tranches d'extrémités 7' à raccorder ensemble par les moyens 10); et
- à la figure 8 une juxtaposition non jointive mais espacée avec un espacement d" entre tranches 7 consécutives dans la direction circonférentielle pouvant être de l'ordre de 10 mm ou davantage.

On notera que ces figures 6-8 identifient schématiquement par des traits discontinus la traversée des tranches 7 consécutives, jointives (figures 6 et 7) ou non (figure 8) par au moins un lien annulaire de maintien 8 radialement interne et par au moins une ceinture 9 radialement externe par rapport à ce lien 8.

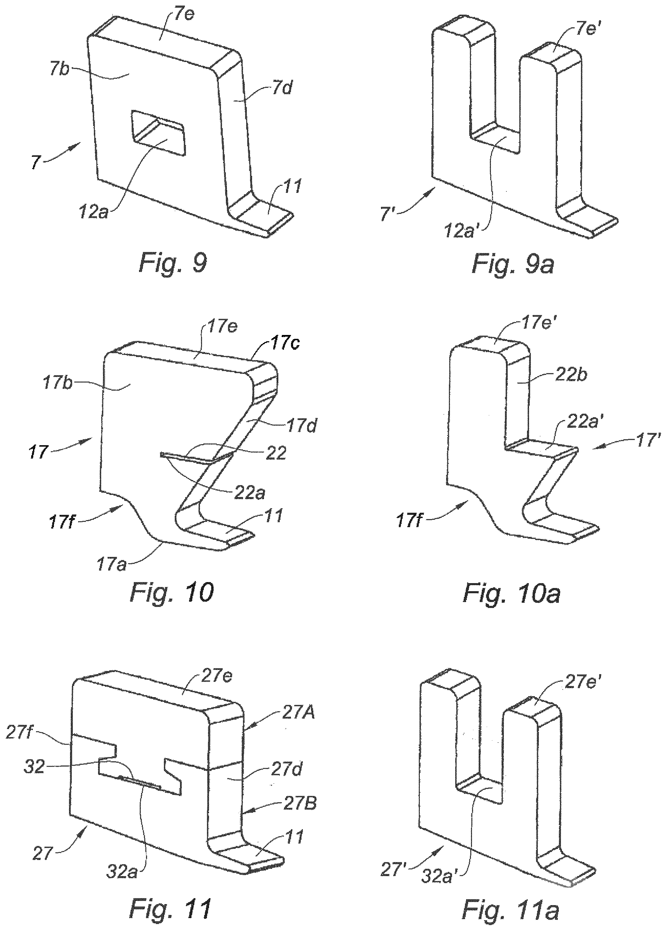

Les figures 9-9a, 10-10a, 11-11a illustrent trois géométries utilisables parmi d'autres pour les tranches 7 en dehors de celles situées aux extrémités de ceinture 9a, 9b à raccorder ensemble (tranches courantes 7 des figures 9, 10, 11), et pour les seules tranches d'extrémités 7' à raccorder (figures 9a, 10a, 11a).

La tranche courante 7 de la figure 9 est analogue à celle de la figure 1, alors que les tranches d'extrémités 7' de la figure 9a s'en distinguent chacune par un dégagement radial à l'extérieur de la portée 12a pour permettre le montage des moyens 10, de sorte à former à partir de la face de soutien 7e' une gorge en U dont le fond 12a' définit un renfoncement (à la même hauteur radiale que le bord interne 12a de la lumière 12) sur lequel sont appliquées les deux extrémités de ceinture 9a, 9b à raccorder.

La tranche courante 17 de la figure 10 présente à la différence de la figure 9 une fente 22 latéralement débouchante sur la face latérale axialement externe 17d de la tranche 17, la fente 22 étant formée sensiblement à mi-hauteur radiale de la tranche 17 dans cet exemple et étant adaptée pour recevoir, par son bord radialement interne formant portée 22a, la ceinture 9 qui est enfilée par la face latérale 17d. De plus, la tranche 17 présente une largeur axiale globalement décroissante de sa face de soutien 17e à sa face de montage 17a (i.e. un profil globalement trapézoïdal pour ses faces frontales 17b, 17c), laquelle n'est pas sensiblement plane contrairement à celle de la figure 9 mais de forme arrondie jusqu'à sa lèvre de calage 11 qui seule définit la portion la plus radialement interne de la tranche 17. Quant aux tranches d'extrémités 17' de la figure 10a, elles se distinguent de la tranche 17 en ce que leurs portées 22a' sont constituées par un épaulement axial qui est formé à la même hauteur radiale que la portée 22a de la fente 22 et qui se prolonge à angle droit par une portion radiale 22b perpendiculaire à la face de soutien 17e' de la tranche 17' (laquelle se prolonge ainsi radialement vers l'intérieur par une marche d'escalier menant à l'épaulement 22a'). Sur les figures 10 et 10a, on relève également la présence d'un chanfrein 17f, 17'f. Cela facilite voire permet le montage de l'anneau sur une jante de largeur étroite, sans gêner le mouvement des talons du pneumatique et en gardant une face de soutien suffisamment large.

La tranche courante 27 de la figure 11 présente comme celle de la figure 9 une lumière axialement centrale 32 située radialement entre la face de montage 27a et la face de soutien 27e et axialement entre les faces latérales 27d et 27f, mais à la différence de la figure 9 :
- la lumière 32 présente une hauteur radiale très réduite lui conférant la géométrie d'une fente formant portée 32a, apte à être traversée par la ceinture 9 en l'enserrant étroitement, et
- la tranche courante 27 est constituée d'un assemblage mécanique (par exemple par emboîtement de type tenon-mortaise) ou d'un collage ou surmoulage d'une partie radialement externe 27A sur une partie radialement interne 27B, ces parties 27A, 27B pouvant être constituées ou non du même matériau ou mélange de matériaux.

On notera qu'il convient d'appliquer au préalable la ceinture 9 sur la portée 32a de la partie interne 27B (qui définit un bord radialement interne 32a de la lumière 32), avant d'assembler la partie externe 27A sur la partie interne 27B équipée de la ceinture 9.

Quant aux tranches d'extrémités 27' de la figure 11a, elles peuvent être par exemple analogues à celle de la figure 9a avec, à la même hauteur radiale que la lumière 32, une portée 32a' en forme de fond de gorge en U ménagée à partir de la face de soutien 27e' et recevant les extrémités de ceinture 9a, 9b de manière dégagée dans la direction radiale pour permettre d'accéder aux moyens 10.

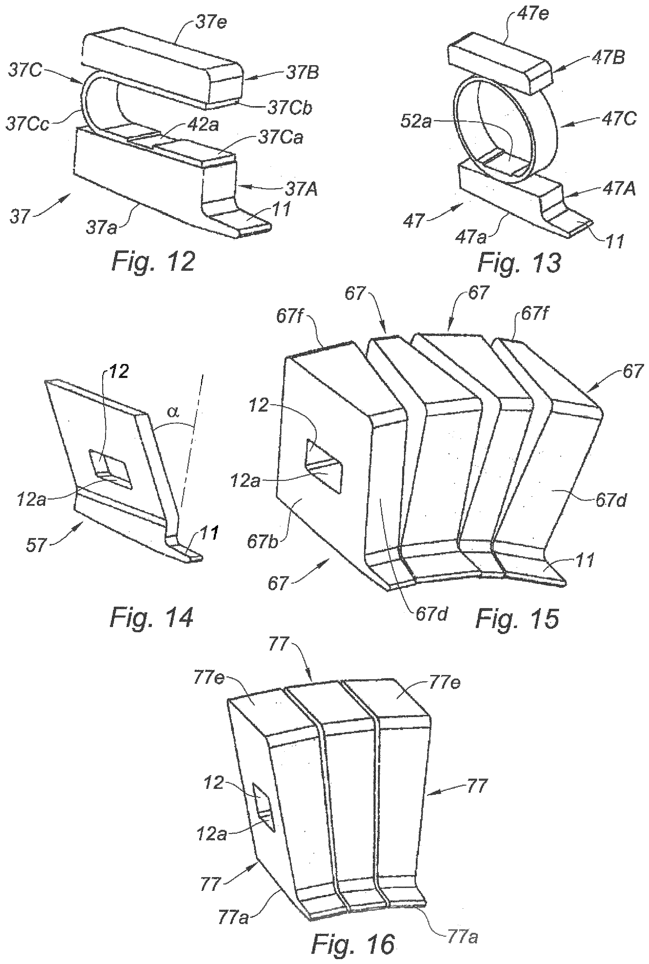

Les tranches courantes 37, 47 des figures 12-13 illustrent un second exemple ne faisant pas partie de l'invention, avec dans les deux cas trois parties 37A, 37B et 37C, 47C qui sont radialement superposées et assemblées l'une sur l'autre (par assemblage mécanique par exemple par rivetage, ou chimique par exemple par collage ou surmoulage) et qui comprennent deux parties rigides radialement interne 37A, 47A et externe 37B, 47B définissant respectivement la face de montage 37a, 47a et la face de soutien 37e, 47e et une partie élastique intermédiaire 37C, 47C les reliant entre elles à la manière d'une lame de ressort déformable dans la direction radiale. Les parties 37A, 37B et 37C, 47C sont dans ces exemples constituées de blocs à faces frontales globalement rectangulaires, et la partie intermédiaire 37C, 47C (de préférence métallique) prend appui sur les parties 37A et 37B, 47A et 47B (les épaisseurs des parties 37A, 37B, 37C et 47A, 47B, 47C dans la direction circonférentielle étant identiques ou similaires) en formant au moins un arc de cercle entre les parties 37A et 37B, 47A et 47B. De plus, la partie intermédiaire 37C, 47C forme une portée de réception 42a, 52a adaptée pour caler axialement la ceinture 9 dans une zone radialement la plus interne qu'elle présente. Plus précisément :
- la partie intermédiaire 37C de la figure 12 est sensiblement en forme de c dont les deux branches axiales 37Ca, 37Cb parallèles qui sont fixées aux parties 37A, 37B sont reliées entre elles par une portion de liaison 37Cc en arc de cercle, avec la branche interne qui est pourvue de la portée 42a de calage axial de la ceinture 9, et
- la partie intermédiaire 47C de la figure 13 est en forme de bague dont l'axe de symétrie est perpendiculaire aux faces frontales des parties 47A et 47B et qui est solidaire de ces dernières d'une manière tangentielle par des zones radialement interne et externe de la bague, avec la face externe de la zone interne qui est pourvue de la portée 52a de calage axial de la ceinture 9.

Il convient de noter que pour les réalisations des figures 12 et 13, la souplesse des tranches dans la direction radiale peut être obtenue en jouant sur la géométrie des tranches. Cela peut permettre, incidemment, de réduire le poids de l'ensemble monté.

La tranche 57 illustrée à la figure 14 illustre une variante de la figure 9 utilisable pour les tranches courantes 57 en dehors de celles situées aux extrémités de ceinture 9a, 9b à raccorder ensemble. Cette tranche 57 qui est également munie d'une lumière 12 se distingue essentiellement de celle de la figure 9, en ce qu'elle est inclinée de manière oblique (selon un angle aigu α par exemple compris entre 5° et 30°) à partir d'une zone radialement interne de la tranche 57 comprenant la lèvre de calage 11, par rapport au plan sensiblement radial de cette zone interne. Cette inclinaison permet un contact latéral entre deux tranches voisines.

Les tranches courantes 67 jointives illustrées à la figure 15 illustrent un agencement en quinconce des faces latérales de tranches 67d, 67f successives dont les faces frontales 67b, 67c sont analogues à celles de la tranche 7 de la figure 9, du fait que deux tranches 67 consécutives selon la figure 15 sont de géométries différentes puisqu'elles présentent dans la direction circonférentielle respectivement une épaisseur qui croît axialement vers l'intérieur et qui croît axialement vers l'extérieur. On comprend que cet agencement alterné permet de juxtaposer les tranches 67 en alignement axial autour de la jante 2.

Les tranches courantes 77 jointives illustrées à la figure 16 illustrent un agencement possible pour des tranches courantes 77 identiques entre elles analogues à celle de la figure 9, mais qui présentent dans la direction circonférentielle une épaisseur qui croît radialement vers l'extérieur, dans cet exemple continûment de la face de montage 77a à la face de soutien 77e de chaque tranche 77. On peut voir que les tranches 77 sont ainsi jointives sur toutes leurs hauteurs radiales respectives.

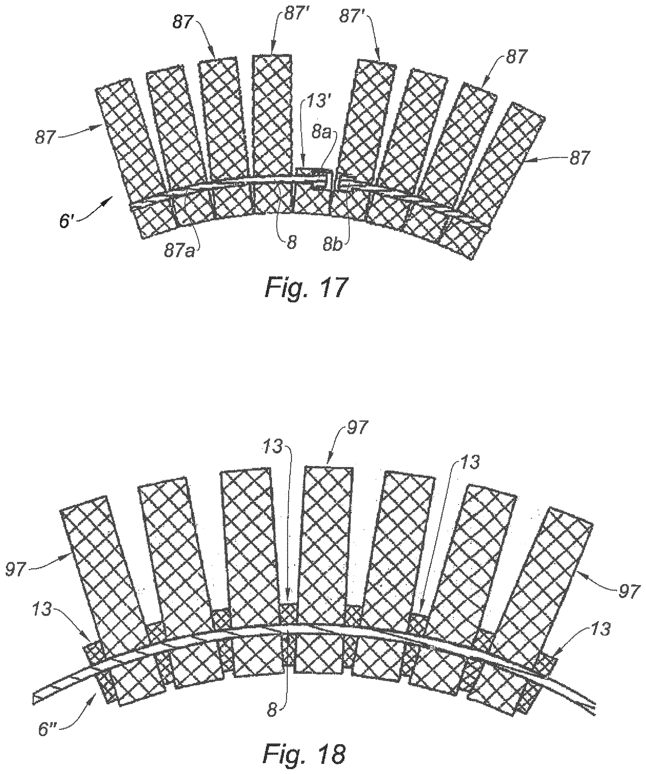

La figure 17 montre des tranches courantes 87 jointives et les deux tranches d'extrémités 87' d'un anneau 6' selon une variante de l'invention, caractérisée par l'insertion d'une cale 13' entre les tranches d'extrémités 87', avec la cale 13' qui est traversée par l'une des deux extrémités 8a d'un lien annulaire de maintien 8 tel que celui de la figure 3. On voit que la cale 13' a sa face radialement interne alignée avec les faces de montage 87a respectives des tranches 87, 87', et a sa face radialement externe située radialement en retrait de l'emplacement à mi-hauteur des tranches 87, 87' qui est adapté pour être traversé par la ou chaque ceinture de serrage 9 verrouillée entre les tranches d'extrémités 87'.

On notera que la cale 13' permet de s'opposer au glissement des tranches d'extrémités 87' en roulage à plat, et d'éviter ainsi un effet de propagation de type « dominos » sur les autres tranches 87.

La figure 18 montre en variante de la figure 17 des tranches courantes 97 (i.e. hors tranches d'extrémités) également jointives par l'intermédiaire d'une multitude de cales 13 dans un anneau 6", conformément au schéma de la figure 7. Chaque cale 13 présente une hauteur radiale réduite entre des zones radialement internes de tranches 97 consécutives, et est uniquement traversée par le ou chaque lien annulaire de maintien 8 de sorte à ne pas entraver la traversée des tranches 97 par la ou chaque ceinture de serrage 9 radialement externe au lien 8.

On notera que les cales 13 permettent d'optimiser le contact mutuel entre les tranches 97.

Dans la description qui précède, la jante 2 de roue est asymétrique, avec notamment un fond de jante de diamètre D. On pourrait néanmoins prévoir une jante plate. Dans ce cas également, on peut définir un fond de jante pour la jante plate.

Par ailleurs, il convient de noter qu'avec un jante plate, il est parfois envisageable de ne pas prévoir de fonction de serrage pour la ceinture 9. En effet, le ceinture 9 peut s'affranchir des composantes de serrage, fixe ou réglable, pour ne conserver que sa fonction générale de maintien, avec un verrouillage.

D'une manière générale et en référence à l'ensemble des exemples venant d'être décrits (les références de la figure 9 étant reprises ci-après uniquement à des fins de simplification), le montage d'un dispositif 5 selon l'invention à l'intérieur d'un ensemble monté 1 comprend par exemple les étapes suivantes (avant gonflage et équilibrage du pneumatique 4) :
- assemblage d'une bande linéaire (i.e. plate, non conformée en anneau 6) comprenant l'ensemble des tranches courantes 7 et d'extrémités 7' juxtaposées de manière jointive ou espacée, qui sont traversées par ladite au moins une ceinture de maintien 9 et éventuellement par ledit au moins un lien annulaire de maintien 8 avec intercalation optionnelle d'une ou plusieurs cales 13 ou 13',
- conformation de cette bande sous forme d'anneau 6 équipé de la ceinture 9 en position non serrée à l'intérieur du pneumatique 4,
- passage sur la jante 2 d'un talon 4a du pneumatique 4 contenant l'anneau 6,
- passage sur la jante 2 de l'anneau 6 équipé de la ceinture 9,
- passage du second talon 4b du pneumatique 4 sur la jante 2 pour terminer le montage.

Lorsque la ceinture de maintien prévoit un serrage, le passage sur la jante 2 de l'anneau 6 équipé de la ceinture s'effectue avec une ceinture non serrée. Puis, on réalise un serrage de l'anneau 6 contre la jante par la ceinture, via les moyens de raccordement verrouillables.

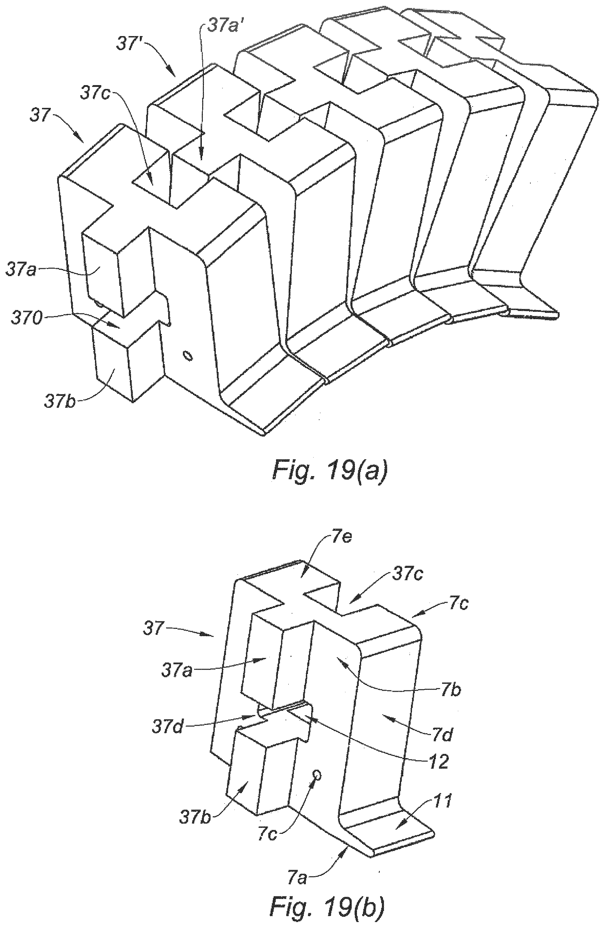

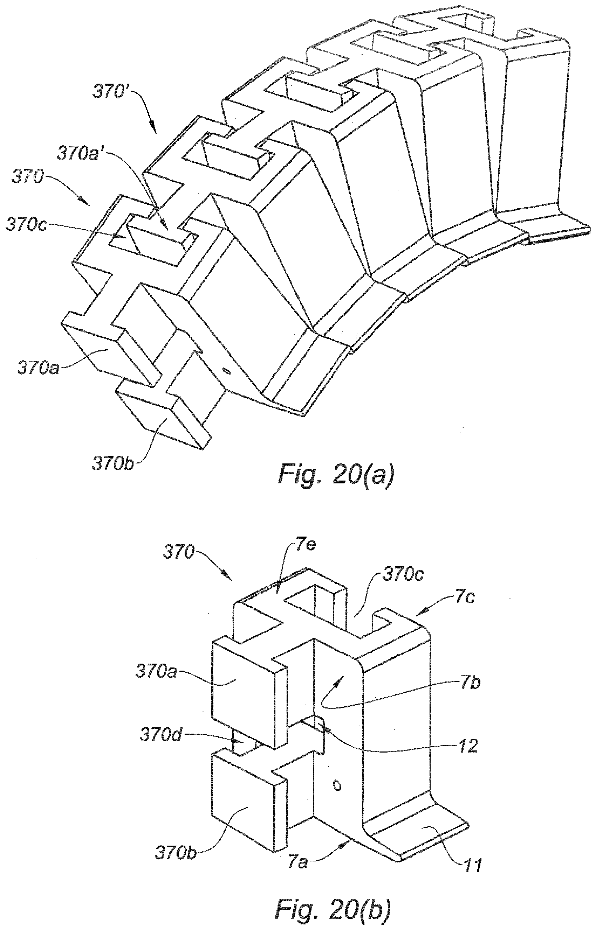

Un cas particulier de secteurs jointifs est représenté sur les figures 19(a) et 19(b) et, selon une variante de conception, sur les figures 20(a) et 20(b).

Sur l'ensemble de ces figures, on propose des secteurs 37, 37'; 370, 370' dont la forme permet une imbrication entre deux secteurs consécutifs. Ainsi, lesdites tranches 37, 37' ; 370, 370', jointives, sont reliées entre elles deux à deux par imbrication.

Pour bien comprendre la forme particulière d'un secteur 37 (figure 19(b)), on peut le décrire en comparaison au secteur 7 de la figure 5. Entre ces figures 19(b) et la figure 5, des mêmes références désignent des éléments identiques et ne sont donc pas décrits de manière détaillée. Sur une face frontale 7b (avant), le secteur 37 comporte une excroissance supérieure 37a et une excroissance inférieure 37b, chacune formée en excroissance à partir de la face frontale 7b. En l'occurrence, chaque excroissance se présente sous la forme d'un parallélépipède. Toujours sur cette face frontale 7b, les deux excroissances 37a, 37b sont séparées par une ouverture 37d faisant face à l'ouverture 12. Ces ouvertures 37d, 12 permettent de faire passer la ceinture de maintien, dont la conception peut être choisie de manière indifférente selon les différentes variantes décrites précédemment. Par ailleurs, sur l'autre face frontale 7c (arrière), opposée à la première face frontale 7b, il est prévu une ouverture 37c s'étendant entre la face de montage 7a radialement interne, adaptée pour être montée sur ledit fond de jante et la face de soutien 7e radialement externe, adaptée pour soutenir le pneumatique en roulage à plat.

Comme on peut le constater sur la figure 19(a), l'ouverture 37c présente des dimensions adaptées pour recevoir les excroissances 37'a d'un secteur 37' attenant. En l'occurrence, l'ouverture 37c a donc également une forme parallélépipédique.

Une telle conception (imbrication) facilite le montage des secteurs entre eux en leur fournissant un guide. Par ailleurs, bien que la ceinture de maintien soit suffisante pour maintenir les secteurs en position, cette imbrication participe à limiter les mouvements d'un secteur à l'autre dans la direction axiale (axe de la roue) et implique donc une plus grande stabilité à un effort axial. Cela procure de plus une meilleure répartition de la charge sur les tranches en contact avec le pneu. Enfin, cela permet une forte diminution des remontées de vibrations grâce à une continuité de la bande de roulement.

Sur les figures 20(a) et 20(b), on a représenté une variante à la conception proposée sur les figures 19(a) et 19(b), variante permettant toujours une imbrication entre deux secteurs consécutifs.

En comparaison aux figures 19(a) et 19(b), on note que la forme des excroissances 370a, 370d d'un secteur 370 est différente et, en conséquence que l'ouverture 370c, adaptée pour recevoir des excroissances 370a' d'un autre secteur 370', présente également une forme différente. L'ouverture 370d, prévue entre les deux excroissances 370a, 370b pour laisser passer la ceinture de maintien peut être identique à celle de l'ouverture 37d. Tout le reste est identique.

En l'occurrence, les excroissances 370a, 370b présentent une forme dont la section est en T.

Enfin, il convient de noter qu'avantageusement, les secteurs, et ce quelle que soit la conception envisagée pour un secteur, seront choisis pour assurer, sur l'ensemble du dispositif de roulage à plat, une répartition de masse qui est équilibrée.

En effet et par exemple, si l'on se reporte à la vue d'ensemble de la figure 2, la présence de moyens de raccordement et de verrouillage 10, 10', 10" implique un retrait de masse, au niveau des secteurs, pour laisser l'accès à ces moyens de verrouillage. Au contraire, la présence des moyens de raccordement et de verrouillage 10, 10', 10" implique un ajout local de masse, lequel ne compense pas nécessairement le retrait de masse effectué au niveau des secteurs.

Dans un tel cas, la masse du dispositif de roulage à plat n'est pas répartie de façon équilibrée, ce qui génère un léger effet de balourd susceptible d'être préjudiciable.

Même si cet léger effet de balourd peut être tout à fait acceptable, il reste avantageux de l'éliminer. Aussi, il est avantageux que le dispositif de roulage à plat présente une répartition équilibrée des masses.

A cet effet, on peut envisager plusieurs solutions.

Une première solution est de réaliser un retrait de masse, au niveau d'une zone Z1 de secteurs situés, sur le dispositif de roulage à plat, de façon diamétralement opposée à la zone Z2 comportant lesdits moyens de raccordement et de verrouillage 10. En pratique, on peut par exemple prévoir sur la zone Z2, des secteurs 27' tels que représentés sur la figure 11a et, hors des zones Z1 et Z2, des secteurs 7 tels que représentés sur les figures 5 ou 9.

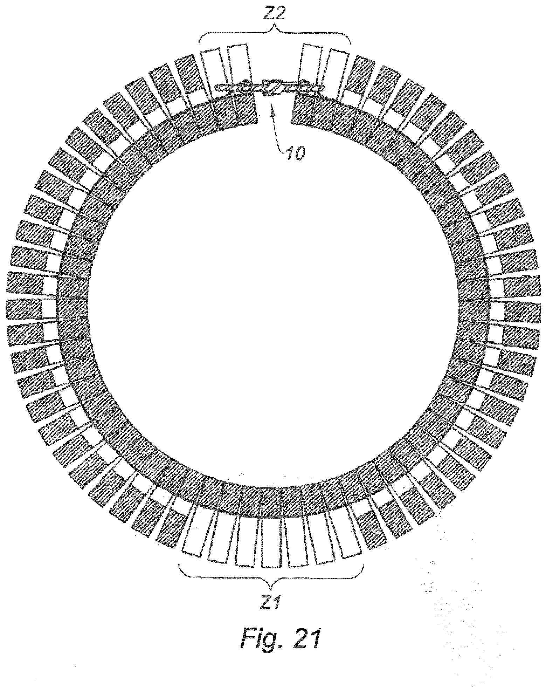

C'est la solution qui est représentée sur la figure 21. En effet, au niveau de la zone Z2, l'ajout de masse de moyens de raccordement et de verrouillage 10 ne compense généralement pas la perte de masse des secteurs (par exemple du type de la figure 11a) permettant de laisser l'accès à ces moyens de raccordement et de verrouillage 10.

Une deuxième solution est, par exemple d'ajouter des masselottes M sur les secteurs de la zone Z2 pour justement localement compenser leur perte de masse par rapport aux secteurs qui sont hors de la zone Z2. Dans ce cas, il n'est pas nécessaire de mettre en oeuvre une zone Z1.

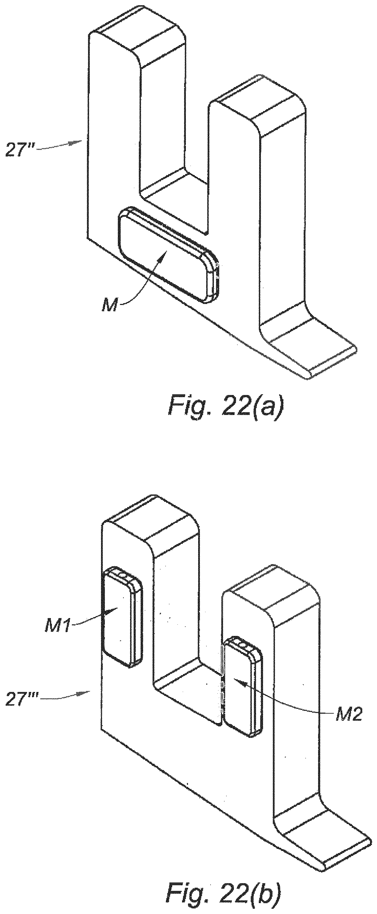

C'est ce qui est représenté, selon deux exemples d'implémentation, sur les figures 22(a) et 22(b).

Plus précisément, sur la figure 22(a), on a représenté selon une vue en perspective un secteur 27", assimilable au secteur 27' de la figure 11a, mais comportant une masselotte M. Cette masselotte M permet d'alourdir le secteur 27" de sorte que sa masse soit identique à celle d'un secteur 7 tel que représenté sur la figure 5 ou la figure 11 et employé hors de la zone Z2.

De manière analogue, sur la figure 22(b), on a représenté selon une vue en perspective un secteur 27''', assimilable au secteur 27' de la figure 11a, mais comportant deux masselotte M1, M2. Ces masselottes M1, M2 permettent d'alourdir le secteur 27''' de sorte que sa masse soit identique à celle d'un secteur 7 tel que représenté sur la figure 5 ou la figure 11 et employé hors de la zone Z2.

Une troisième solution (non représentée) est de prévoir cette masse d'équilibrage au sein de la ceinture de maintien.

## Revendications

1. Dispositif de roulage à plat (5) adapté pour être utilisé dans un ensemble monté (1) de véhicule automobile comprenant une jante de roue (2) présentant un fond de jante (3a) de diamètre D et un pneumatique (4) monté sur la jante de roue, le dispositif de roulage à plat étant adapté pour soutenir le pneumatique en roulage à plat et comprenant :
- un anneau de soutien (6, 6', 6") comprenant une multitude de tranches axiales (7 et 7', 17 et 17', 27 et 27', 37, 57, 67, 77, 87 et 87', 97) qui sont juxtaposées sur une circonférence de l'anneau de soutien et qui définissent une face de montage (7a, 17a, 27a) radialement interne adaptée pour être montée sur ledit fond de jante et une face de soutien radialement externe (7e, 17e et 17e', 27e, 77e) adaptée pour soutenir le pneumatique en roulage à plat, chacune desdites tranches présentant au moins une portée (12a et 12a', 22a et 22a', 32a et 32a') située radialement entre ladite face de montage et ladite face de soutien, et
- au moins une ceinture de maintien (9) qui enserre l'anneau de soutien sur ladite circonférence de sorte à le maintenir sensiblement au contact dudit fond de jante et qui traverse lesdites tranches en étant appliquée sur ladite au moins une portée de chacune d'entre elles,
lesdites tranches n'étant pas articulées entre elles et étant jointives ou espacées entre elles sur ladite circonférence par une somme totale d'espacements consécutifs, mesurés entre lesdites tranches au niveau de ladite face de montage, qui est inférieure à π.D/2,
ladite au moins une ceinture de maintien (9) présentant deux extrémités de ceinture (9a, 9b) espacées et reliées l'une à l'autre par des moyens de raccordement et de verrouillage (10, 10', 10") aptes à verrouiller ladite au moins une ceinture de maintien, ce verrouillage pouvant assurer un serrage avantageusement réglable desdites tranches (7 et 7', 17 et 17', 27 et 27', 37, 57, 67, 77, 87 et 87', 97),
**caractérisé en ce que**, sur toute ou partie de ladite circonférence, ladite au moins une portée (12a, 22a et 22a', 32a et 32a') de chacune desdites tranches (7 et 7', 17 et 17', 27 et 27', 57, 67, 77) est formée :
- au niveau desdites extrémités de ceinture (9a, 9b), par un renfoncement radial s'étendant à partir de ladite face de soutien (7e', 17e', 27e') et constitué d'un fond axial (12a', 32a') d'une gorge en U ou d'un épaulement axial latéral (22a') de chaque tranche, et
- en dehors desdites extrémités de ceinture, par un bord radialement intérieur (12a, 22a, 32a) d'une lumière ou fente traversante (12, 22, 32) qui est prévue radialement en retrait de ladite face de soutien (7e, 17e, 27e) et qui débouche ou non sur au moins une face latérale (7d, 17d, 27d) de chaque tranche.

2. Dispositif de roulage à plat (5) selon la revendication 1, **caractérisé en ce que** lesdites tranches (7 et 7', 17 et 17', 27 et 27', 37, 57, 67, 77, 87 et 87', 97) présentent chacune, sur toute ou partie de ladite circonférence, une épaisseur circonférentielle de tranche mesurée en ladite face de montage (7a, 17a, 27a) qui est inférieure ou égale à π.D/25.

3. Dispositif de roulage à plat (5) selon l'une des revendications précédentes, **caractérisé en ce que** lesdites tranches (7 et 7', 87 et 87', 97) sont en outre enfilées sur au moins un lien annulaire de maintien circonférentiel (8) desdites tranches en au moins une zone d'enfilage pour chaque tranche qui est distincte de ladite au moins une portée (12a) et qui est localisée radialement à l'extérieur et/ou radialement à l'intérieur et/ou axialement de part et d'autre de ladite au moins une portée (12a), lesdites tranches étant traversées par ledit au moins un lien annulaire de maintien circonférentiel entre deux extrémités adjacentes de lien (8a, 8b) positionnées en regard desdites extrémités de ceinture (9a, 9b).

4. Dispositif de roulage à plat (5) selon la revendication 4, **caractérisé en ce que** ledit au moins un lien annulaire de maintien circonférentiel (8) est choisi parmi les liens métalliques par exemple formés de câbles toronnés ou non, les liens textiles par exemple formés de câblés, les liens élastiques par exemple formés de joncs élastomères et des combinaisons d'au moins deux desdits liens.

5. Dispositif de roulage à plat (5) selon une des revendications précédentes, **caractérisé en ce que** sur toute ou partie de ladite circonférence, lesdites tranches (67) présentent chacune une épaisseur circonférentielle qui varie dans une direction axiale de l'anneau de soutien (6), par exemple avec un agencement en quinconce de faces latérales (67d et 67f) desdites tranches suivant des épaisseurs en alternance minimales et maximales.

6. Dispositif de roulage à plat (5) selon une des revendications précédentes, **caractérisé en ce que** sur toute ou partie de ladite circonférence, lesdites tranches (77) présentent chacune une épaisseur circonférentielle qui varie dans une direction radiale de l'anneau de soutien (6), par exemple qui croît de ladite face de montage (77a) à ladite face de soutien (77e).

7. Dispositif de roulage à plat (5) selon une des revendications précédentes, **caractérisé en ce que** sur tout ou partie de ladite circonférence, lesdites tranches (57) sont inclinées de manière oblique à partir d'une zone radialement interne de chaque tranche (57), par rapport au plan sensiblement radial de cette zone radialement interne.

8. Dispositif de roulage à plat (5) selon une des revendications précédentes, **caractérisé en ce que** ladite face de montage (7a, 17a, 27a) de tout ou partie desdites tranches (7 et 7', 17 et 17', 27 et 27', 37, 57, 67, 77, 87 et 87', 97) est adaptée pour épouser un profil axial dudit fond (3a) de jante (2), la jante de roue étant monobloc à creux de jante (3) circonférentiel, tout ou partie desdites tranches comportant des moyens de calage (11), tels qu'une lèvre ou patte axialement en saillie sur un bord latéral (7d, 17d, 27d, 67d) de chaque tranche, qui sont adaptés pour caler chaque tranche dans ledit creux.

9. Dispositif de roulage à plat (5) selon une des revendications 1 à 7, **caractérisé en ce que** ladite face de montage (7a, 17a, 27a) de tout ou partie desdites tranches (7 et 7', 17 et 17', 27 et 27', 37, 57, 67, 77, 87 et 87', 97) est adaptée pour épouser un profil axial sensiblement plat dudit fond de jante (3a), la jante (2) de roue étant à plusieurs blocs et se terminant par deux rebords de jante axialement interne et externe, et toute ou partie desdites tranches présentant une largeur axiale par exemple adaptée pour bloquer axialement par compression des talons (4a, 4b) du pneumatique (4) contre lesdits rebords de jante.

10. Dispositif de roulage à plat (5) selon une des revendications précédentes, **caractérisé en ce que** lesdites tranches (37, 37' ; 370, 370'), jointives, sont reliées entre elles deux à deux par imbrication.

11. Dispositif de roulage à plat (5) selon une des revendications précédentes, **caractérisé en ce qu'**il présente une répartition équilibrée des masses.

12. Dispositif de roulage à plat (5) selon une des revendications précédentes, **caractérisé en ce que** lesdites tranches (7, 87 et 87', 97) sont reliées deux à deux entre elles, sur toute ou partie de ladite circonférence, par au moins une cale (13, 13') qui se termine radialement en retrait de ladite au moins une portée (12a) et contre laquelle sont montées en butée circonférentielle des zones radialement internes de deux dites tranches consécutives.

13. Dispositif de roulage à plat (5) selon la revendication 3 ou 4 et selon la revendication 12, **caractérisé en ce que** ladite au moins une cale (13') reçoit une dite extrémité (8a) dudit au moins un lien annulaire de maintien (8) et/ou comprend une multitude de cales (13') intercalées entre lesdites tranches (7, 87 et 87', 97) deux à deux adjacentes et traversées par ledit au moins un lien annulaire de maintien en dehors desdites extrémités de lien (8a, 8b).

14. Ensemble monté (1) pour véhicule automobile, comprenant une jante de roue (2), un pneumatique (4) monté contre deux rebords de jante axialement interne (2a) et externe (2b) et un dispositif de roulage à plat (5) monté sur la jante de roue et destiné à soutenir le pneumatique en roulage à plat, **caractérisé en ce que** le dispositif de roulage à plat est tel que défini à l'une des revendications précédentes.

15. Ensemble monté (1) selon la revendication 14 dans lequel la jante (2) de roue est monobloc à creux de jante (3) circonférentiel, **caractérisé en ce que** lesdites faces de montage (7a, 17a, 27a) de toutes ou partie desdites tranches (7 et 7', 17 et 17', 27 et 27', 37, 57, 67, 77, 87 et 87', 97) sont montées dans ledit creux de jante sur toute la largeur axiale de ce dernier.

16. Ensemble monté (1) selon la revendication 14 dans lequel la jante (2) de roue est à plusieurs blocs et à fond sensiblement plat, **caractérisé en ce que** lesdites tranches (7 et 7', 17 et 17', 27 et 27', 37, 57, 67, 77, 87 et 87', 97) bloquent axialement des talons (4a, 4b) du pneumatique (4) contre lesdits rebords de jante (2a, 2b).

## Patentansprüche

1. Notlaufvorrichtung (5), die zur Verwendung in einer an einem Kraftfahrzeug montierten Baugruppe (1) geeignet ist, die eine Radfelge (2) mit einem Felgenboden (3a) des Durchmessers D und einen auf der Radfelge montierten Reifen (4) umfasst, wobei die Notlaufvorrichtung geeignet ist, den Reifen im Notlaufzustand zu stützen, und umfasst:
- einen Stützring (6, 6', 6") mit mehreren axialen Scheiben (7 und 7', 17 und 17', 27 und 27', 37, 57, 67, 77, 87 und 87', 97), die an einem Umfang des Stützrings nebeneinander angeordnet sind und die eine radial innere Montagefläche (7a, 17a, 27a), die zur Montage auf dem Felgenboden geeignet ist, und eine radial äußere Stützfläche (7e, 17e und 17e', 27e, 77e), die zum Stützen des Reifens im Notlaufzustand geeignet ist, wobei jede der Scheiben mindestens eine Auflagefläche (12a und 12a', 22a und 22a', 32a und 32a') aufweist, die radial zwischen der Montagefläche und der Stützfläche angeordnet ist, und
- mindestens einen Haltegurt (9), der den Stützring auf dem Umfang umgibt, um ihn im Wesentlichen in Kontakt mit dem Felgenboden zu halten, und der durch die Scheiben hindurchgeht, indem er an der mindestens einen Auflagefläche von jeder von ihnen angebracht wird,
wobei die Scheiben nicht aneinander angelenkt sind und entlang des Umfangs durch eine Gesamtsumme aufeinanderfolgender Abstände, gemessen zwischen den Scheiben an der Montagefläche, die kleiner als π.D/2 ist, aneinanderstoßend oder voneinander beabstandet sind,
wobei der mindestens eine Haltegurt (9) zwei voneinander beabstandete Gurtenden (9a, 9b) aufweist, die durch Verbindungs- und Verriegelungsmittel (10, 10', 10") miteinander verbunden sind, die geeignet sind, den mindestens einen Haltegurt zu verriegeln, wobei diese Verriegelung in der Lage ist, ein vorteilhaft einstellbares Festziehen der Scheiben (7 und 7', 17 und 17', 27 und 27', 37, 57, 67, 77, 87 und 87', 97) sicherzustellen,
**dadurch gekennzeichnet, dass** über den gesamten oder einen Teil des Umfangs die mindestens eine Auflagefläche (12a, 22a und 22a', 32a und 32a') jeder der Scheiben (7 und 7', 17 und 17', 27 und 27', 57, 67, 77) gebildet wird:
- an den Gurtenden (9a, 9b) durch eine radiale Aussparung, die sich von der Stützfläche (7e', 17e', 27e') aus erstreckt und aus einem axialen Boden (12a', 32a') einer U-förmigen Nut oder einer seitlichen axialen Schulter (22a') jeder Scheibe besteht, und
- außerhalb der Gurtenden durch eine radial innere Kante (12a, 22a, 32a) eines durchgehenden Spalts oder Schlitzes (12, 22, 32), der radial von der Stützfläche (7e, 17e, 27e) zurückgesetzt vorgesehen ist und der sich zu mindestens einer Seitenfläche (7d, 17d, 27d) jeder Scheibe öffnen kann oder nicht.

2. Notlaufvorrichtung (5) nach Anspruch 1, **dadurch gekennzeichnet, dass** die Scheiben (7 und 7', 17 und 17', 27 und 27', 37, 57, 67, 77, 87 und 87', 97) jeweils über den gesamten oder einen Teil des Umfangs eine an der Montagefläche (7a, 17a, 27a) gemessene Umfangsdicke der Scheibe aufweisen, die kleiner oder gleich π.D/25 ist.

3. Notlaufvorrichtung (5) nach einem der vorhergehenden Ansprüche, **dadurch gekennzeichnet, dass** die Scheiben (7 und 7', 87 und 87', 97) weiterhin auf mindestens ein ringförmiges, umlaufendes Halteglied (8) der Scheiben in mindestens einer Einfädelzone für jede Scheibe aufgefädelt sind, die sich von der mindestens einen Auflagefläche (12a) unterscheidet und die sich radial außerhalb und/oder radial innerhalb und/oder axial auf beiden Seiten der mindestens einen Auflagefläche (12a) befindet, wobei die Scheiben von dem mindestens einen ringförmigen, umlaufenden Halteglied zwischen zwei benachbarten Gliedenden (8a, 8b), die gegenüber den Gurtenden (9a, 9b) angeordnet sind, durchquert werden.

4. Notlaufvorrichtung (5) nach Anspruch 4, **dadurch gekennzeichnet, dass** das mindestens eine ringförmige, umlaufende Halteglied (8) ausgewählt ist aus metallischen Gliedern, die beispielsweise aus verseilten oder nicht verseilten Kabeln gebildet sind, aus textilen Gliedern, die beispielsweise aus Schnüren gebildet sind, aus elastischen Gliedern, die beispielsweise aus elastomeren Stäben gebildet sind, und aus Kombinationen von mindestens zwei dieser Glieder.

5. Notlaufvorrichtung (5) nach einem der vorhergehenden Ansprüche, **dadurch gekennzeichnet, dass** die Scheiben (67) über den gesamten oder einen Teil des Umfangs jeweils eine in axialer Richtung des Stützrings (6) variierende Umfangsdicke aufweisen, beispielsweise mit einer versetzten Anordnung von Seitenflächen (67d und 67f) der Scheiben in abwechselnden minimalen und maximalen Dicken.

6. Notlaufvorrichtung (5) nach einem der vorhergehenden Ansprüche, **dadurch gekennzeichnet, dass** die Scheiben (77) über den gesamten oder einen Teil des Umfangs jeweils eine Umfangsdicke aufweisen, die in radialer Richtung des Stützrings (6) variiert, beispielsweise von der Montagefläche (77a) zu der Stützfläche (77e) hin zunimmt.

7. Notlaufvorrichtung (5) nach einem der vorhergehenden Ansprüche, **dadurch gekennzeichnet, dass** die Scheiben (57) über den gesamten oder einen Teil des Umfangs von einer radial inneren Zone jeder Scheibe (57) aus schräg geneigt sind, und zwar in Bezug auf die im Wesentlichen radiale Ebene dieser radial inneren Zone.

8. Notlaufvorrichtung (5) nach einem der vorhergehenden Ansprüche, **dadurch gekennzeichnet, dass** die Montagefläche (7a, 17a, 27a) aller oder eines Teils der Scheiben (7 und 7', 17 und 17', 27 und 27', 37, 57, 67, 77, 87 und 87', 97) geeignet sind, sich an ein axiales Profil des Bodens (3a) der Felge (2) anzupassen, wobei die Radfelge einstückig mit einem umlaufenden Felgenbett (3) ausgebildet ist, wobei alle oder ein Teil der Scheiben Verkeilungsmittel (11) aufweisen, wie beispielsweise eine axial vorstehende Lippe oder Lasche an einer Seitenkante (7d, 17d, 27d, 67d) jeder Scheibe, die dazu geeignet sind, jede Scheibe in dem Bett zu verkeilen.

9. Notlaufvorrichtung (5) nach einem der Ansprüche 1 bis 7, **dadurch gekennzeichnet, dass** die Montagefläche (7a, 17a, 27a) aller oder eines Teils der Scheiben (7 und 7', 17 und 17', 27 und 27', 37, 57, 67, 77, 87 und 87', 97) geeignet ist, sich an ein im Wesentlichen flaches axiales Profil des Felgenbodens (3a) anzupassen, wobei die Radfelge (2) mehrblockig ist und in zwei axial inneren und äußeren Felgenflanschen endet, und wobei alle oder ein Teil der Scheiben eine axiale Breite aufweisen, die beispielsweise dazu geeignet ist, durch Kompression Wülste (4a, 4b) des Reifens (4) gegen die Felgenflansche axial zu sperren.

10. Notlaufvorrichtung (5) nach einem der vorhergehenden Ansprüche, **dadurch gekennzeichnet, dass** die Scheiben (37, 37'; 370, 370'), die aneinander stoßen, durch Verschachtelung paarweise miteinander verbunden sind.

11. Notlaufvorrichtung (5) nach einem der vorhergehenden Ansprüche, **dadurch gekennzeichnet, dass** sie eine ausgeglichene Masseverteilung aufweist.

12. Notlaufvorrichtung (5) nach einem der vorhergehenden Ansprüche, **dadurch gekennzeichnet, dass** die Scheiben (7, 87 und 87', 97) paarweise über den gesamten oder einen Teil des Umfangs durch mindestens einen Keil (13, 13') miteinander verbunden sind, der radial zurückgesetzt von der mindestens einen Auflagefläche (12a) endet und an dem radial innere Bereiche von zwei aufeinanderfolgenden Scheiben in Umfangsanschlag montiert sind.

13. Notlaufvorrichtung (5) nach Anspruch 3 oder 4 und nach Anspruch 12, **dadurch gekennzeichnet, dass** der mindestens eine Keil (13') ein Ende (8a) des mindestens einen ringförmigen Haltegliedes (8) aufnimmt und/oder eine Mehrzahl von Keilen (13') umfasst, die zwischen den Scheiben (7, 87 und 87', 97) paarweise nebeneinander angeordnet sind und von dem mindestens einen ringförmigen Halteglied außerhalb der Gliedenden (8a, 8b) durchquert werden.

14. Montierte Baugruppe (1) für ein Kraftfahrzeug, umfassend eine Radfelge (2), einen Reifen (4), der gegen zwei axial innere (2a) und äußere (2b) Felgenflansche montiert ist, und eine Notlaufvorrichtung (5), die an der Radfelge montiert und dazu bestimmt ist, den Reifen im Notlaufzustand zu stützen, **dadurch gekennzeichnet, dass** die Notlaufvorrichtung wie in einem der vorhergehenden Ansprüche definiert ist.

15. Montierte Baugruppe (1) nach Anspruch 14, wobei die Radfelge (2) einstückig mit einem umlaufenden Felgenbett (3) ausgebildet ist, **dadurch gekennzeichnet, dass** die Montageflächen (7a, 17a, 27a) aller oder eines Teils der Scheiben (7 und 7', 17 und 17', 27 und 27', 37, 57, 67, 77, 87 und 87', 97) in dem Felgenbett über dessen gesamte axiale Breite montiert sind.

16. Montierte Baugruppe (1) nach Anspruch 14, wobei die Radfelge (2) mehrblockig ist und im Wesentlichen einen flachen Boden aufweist, **dadurch gekennzeichnet, dass** die Scheiben (7 und 7', 17 und 17', 27 und 27', 37, 57, 67, 77, 87 und 87', 97) Wülste (4a, 4b) des Reifens (4) axial gegen die Felgenflansche (2a, 2b) sperren.

## Claims

1. Run-flat device (5) suitable for being used in a mounted assembly (1) of a motor vehicle comprising a wheel rim (2) having a rim bottom (3a) of diameter D and a tyre (4) mounted on the wheel rim, the run-flat device being suitable for supporting the run-flat tyre and comprising:
- a support ring (6, 6', 6") comprising a plurality of axial segments (7 and 7', 17 and 17', 27 and 27', 37, 57, 67, 77, 87 and 87', 97) that are juxtaposed on a circumference of the support ring and that define a radially inner mounting surface (7a, 17a, 27a) suitable for being mounted on said rim bottom and a radially outer support surface (7e, 17e and 17e', 27e, 77e) suitable for supporting the run-flat tyre, each of said segments having at least one bearing (12a and 12a', 22a and 22a', 32a and 32a') situated radially between said mounting surface and said support surface, and
- at least one holding belt (9) that encloses the support ring around said circumference in such a way as to hold it substantially in contact with the rim bottom and that passes through said segments, being applied against said at least one bearing of each of them,
said segments not being articulated with each other and being contiguous or spaced apart from each other on the circumference by a total sum of consecutive spacings, measured between the segments at said mounting surface, that is less than π.D/2,
said at least one holding belt (9) having two belt ends (9a, 9b) spaced apart and connected to each other by connecting and locking means (10, 10' 10") capable of locking said at least one holding belt, this locking being able to ensure an advantageously adjustable clamping of said segments (7 and 7', 17 and 17', 27 and 27', 37, 57, 67, 77, 87 and 87', 97),
**characterised in that**, over all or a portion of said circumference, said at least one bearing (12a, 22a and 22a', 32a and 32a') of each of said segments (7 and 7', 17 and 17', 27 and 27', 57, 67, 77) is formed:
- at said belt ends (9a, 9b), by a radial reinforcement extending from said support surface (7e', 17e', 27e') and constituted of an axial bottom (12a', 32a') of a U-shaped recess or of a lateral axial shoulder (22a') of each segment, and
- outside of said belt ends, by a radially inner edge (12a, 22a, 32a) of a space or through slot (12, 22, 32) that is provided radially withdrawn from said support surface (7e, 17e, 27e) and that opens out or not on at least one lateral surface (7d, 17d, 27d) of each segment.

2. Run-flat device (5) according to claim 1, **characterised in that** said segments (7 and 7', 17 and 17', 27 and 27', 37, 57, 67, 77, 87 and 87', 97) each have, over all or a portion of said circumference, a circumferential segment thickness measured in said mounting surface (7a, 17a, 27a) that is less than or equal to π.D/25.

3. Run-flat device (5) according to one of the preceding claims, **characterised in that** said segments (7 and 7', 87 and 87', 97) are further threaded on at least one circumferential holding annular link (8) of said segments in at least one threading zone for each segment that is separate from said at least one bearing (12a) and that is located radially outside and/or radially inside and/or axially on either side of said at least one bearing (12a), said segments being passed through by said at least one circumferential holding annular link between two adjacent linking ends (8a, 8b) positioned facing said belt ends (9a, 9b).

4. Run-flat device (5) according to claim 4, **characterised in that** said at least one circumferential holding annular link (8) is selected from among metal links for example formed of cables, stranded or not, textile links for example formed of cables, elastic links for example formed of elastomer rushes and combinations of at least two of said links.

5. Run-flat device (5) according to one of the preceding claims, **characterised in that** over all or a portion of said circumference, said segments (67) each have a circumferential thickness that varies in an axial direction of the support ring (6), for example with an alternating arrangement of lateral surfaces (67d and 67f) of said segments according to alternating minimum and maximum thicknesses.

6. Run-flat device (5) according to one of the preceding claims, **characterised in that** over all or a portion of said circumference, said segments (77) each have a circumferential thickness that varies in a radial direction of the support ring (6), for example which increases from said mounting surface (77a) to said support surface (77e).

7. Run-flat device (5) according to one of the preceding claims, **characterised in that** over all or a portion of said circumference, said segments (57) are inclined obliquely from a radially inner zone of each segment (57), with respect to the substantially radial plane of this radially inner zone.

8. Run-flat device (5) according to one of the preceding claims, **characterised in that** said mounting surface (7a, 17a, 27a) of all or a portion of said segments (7 and 7', 17 and 17', 27 and 27', 37, 57, 67, 77, 87 and 87', 97) is suitable for moulding an axial profile of said rim (2) bottom (3a), the wheel rim being a one-piece hollow circumferential rim (3), all or a portion of said segments comprising blocking means (11), such as a lip or tab axially projecting over a lateral edge (7d, 17d, 27d, 67d) of each segment, that are suitable for blocking each segment in said hollow.

9. Run-flat device (5) according to one of claims 1 to 7, **characterised in that** said mounting surface (7a, 17a, 27a) of all or a portion of said segments (7 and 7', 17 and 17', 27 and 27', 37, 57, 67, 77, 87 and 87', 97) is suitable for moulding a substantially flat axial profile of said rim bottom (3a), the wheel rim (2) being of several blocks and ending with two axially inner and outer rim edges, and all or a portion of said segments having an axial width for example suitable for blocking axially by compression of the beads (4a, 4b) of the tyre (4) against said rim edges.

10. Run-flat device (5) according to one of the preceding claims, **characterised in that** said contiguous segments (37, 37'; 370, 370'), are connected to each other two-by-two by interlocking.

11. Run-flat device (5) according to one of the preceding claims, **characterised in that** it has a balanced mass distribution.

12. Run-flat device (5) according to one of the preceding claims, **characterised in that** said segments (7, 87 and 87', 97) are connected two-by-two to each other, over all or a portion of said circumference, by least one wedge (13, 13') which ends radially withdrawn from said at least one bearing (12a) and against which are mounted in circumferential abutment, radially inner zones of two said consecutive segments.

13. Run-flat device (5) according to claim 3 or 4 and according to claim 12, **characterised in that** said at least one wedge (13') receives a said end (8a) of said at least one holding annular link (8) and/or comprises a plurality of wedges (13') inserted between said segments (7, 87 and 87', 97) two-by-two, adjacent and passed through by said at least one holding annular link outside of said link ends (8a, 8b).

14. Mounted assembly (1) for a motor vehicle, comprising a wheel rim (2), a tyre (4) mounted against two axially inner (2a) and outer (2b) rim edges and a run-flat device (5) mounted on the wheel rim and intended to support the run-flat tyre, **characterised in that** the run-flat device is such as defined in one of the preceding claims.

15. Mounted assembly (1) according to claim 14, wherein the wheel rim (2) is a one-piece hollow circumferential rim (3), **characterised in that** said mounting surfaces (7a, 17a, 27a) of all or a portion of said segments (7 and 7', 17 and 17', 27 and 27', 37, 57, 67, 77, 87 and 87', 97) are mounted in said rim hollow over the whole axial width of the latter.

16. Mounted assembly (1) according to claim 14, wherein the wheel rim (2) is of several blocks and of a substantially flat bottom, **characterised in that** said segments (7 and 7', 17 and 17', 27 and 27', 37, 57, 67, 77, 87 and 87', 97) axially block beads (4a, 4b) of the tyre (4) against said rim edges (2a, 2b).
